# EUROPÄISCHE PATENTSCHRIFT

(11) **EP 2 735 073 B1**
(45) Veröffentlichungstag und Bekanntmachung des Hinweises auf die Patenterteilung: **24.10.2018**
(21) Anmeldenummer: 12721857.6
(22) Anmeldetag: 21.05.2012
(51) Int. Cl.: H02J 7/00

(54) **SYSTEM MIT BATTERIELADEGERÄT UND BORDNETZVERSORGUNGSSTUFE**
SYSTEM WITH BATTERY CHARGING DEVICE AND VEHICLE ELECTRICAL SYSTEM POWER SUPPLY STAGE
SYSTÈME COMPORTANT UN CHARGEUR DE BATTERIE ET UN ÉTAGE D'ALIMENTATION DU RÉSEAU DE BORD

(30) Priorität: 18.07.2011 DE 102011079315
(43) Veröffentlichungstag der Anmeldung: 28.05.2014
(73) Patentinhaber: Robert Bosch GmbH, 70442 Stuttgart (DE)
(72) Erfinder: WEISSENBORN, Erik, 70374 Stuttgart (DE); FASSNACHT, Jochen, 75365 Calw (DE)
(86) Internationale Anmeldenummer: PCT/EP2012/059326
(87) Internationale Veröffentlichungsnummer: WO 2013/010693

(56) Entgegenhaltungen:
- DE-A1- 19 809 399
- US-A1- 2010 231 169

## Beschreibung

Die Erfindung betrifft ein System mit einem Batterieladegerät und einer Bordnetzversorgungsstufe, welche einen gemeinsam genutzten Aufwärts-/Abwärtswandler aufweist, insbesondere für die Spannungsversorgung des Bordnetzes eines elektrisch betriebenen Fahrzeugs.

### Stand der Technik

Ein Gleichspannungswandler für ein Bordnetz eines elektrisch betriebenen Fahrzeugs besteht häufig aus einem potentialtrennenden Gleichspannungswandler und einer vorgeschalteten Anpassstufe, damit der Gleichspannungswandler optimal genutzt werden kann. Insbesondere bei galvanisch entkoppelten Gleichspannungswandlern ist es für einen optimalen Betrieb des Gleichspannungswandlers vorteilhaft, mit einem konstanten Spannungsverhältnis zwischen Eingangs- und Ausgangsspannung zu arbeiten, so dass die Schaltung nur für einen relativ kleinen Arbeitsspannungsbereich ausgelegt werden muss, was es ermöglicht, die Komponenten zur galvanischen Entkopplung, beispielsweise einen Transformator, kosteneffektiv auszulegen.

Ein Batterieladegerät, beispielsweise für Energiespeicher elektrisch betriebener Fahrzeuge, besteht häufig aus einem Gleichrichter und einer Leistungskorrekturstufe sowie einem potentialtrennenden Gleichspannungswandler. Der Gleichspannungswandler eines Batterieladegeräts kann insbesondere bei einem großen Eingangs- und /oder Ausgangsspannungsbereich häufig nicht über den gesamten Spannungsanpassungsbereich ausgelegt werden, so dass derartige Gleichspannungswandler entweder teuer in der Auslegung sind oder nicht optimal arbeiten können.

Die Druckschrift US 2006/0103359 A1 beispielsweise offenbart einen Gleichspannungswandler mit verbesserter Auslegung für das Laden einer Niedervoltbatterie mit einem Ladegerät, welches für das Laden einer Hochvoltbatterie ausgelegt ist.

Die Druckschrift US 2010/0231169 A1 offenbart ein elektrisches Antriebssystem mit einem Gleichspannungsbus, einem bidirektionalen Aufwärts-/Abwärtswandler, welcher eine Hochvoltbatterie an den Gleichspannungsbus koppelt, einem Gleichspannungswandler, welcher eine Bordnetzbatterie an den Gleichspannungsbus koppelt, und einem Gleichrichter, welcher einen Wechselstromanschluss an den Gleichspannungsbus koppelt. Die Druckschrift DE 198 09 399 A1 offenbart eine Starthilfsanlage für einen Dieselmotor, welche über eine Wechselrichteranordnung mit einem Zwischenkreis verfügt. An dem Zwischenkreis ist eine Heizeinrichtung und eine Heizsteuereinrichtung angebunden.

Die vorliegende Erfindung schafft ein System mit einem Batterieladegerät und einer Bordnetzversorgungsstufe mit den Merkmalen des Patentanspruchs 1 und ein elektrisch betriebenes Fahrzeug mit den Merkmalen des Patentanspruchs 5.

### Vorteile der Erfindung

Bordnetzversorgungsstufe sowohl für den Gleichspannungswandler zur Bordnetzversorgung als auch für ein Batterieladegerät zu verwenden. Auf diese Weise ist es möglich, den Gleichspannungswandler der Bordnetzversorgungsstufe und das Batterieladegerät auf eine ähnliche Leistung bzw. eine ähnliche Eingangs- bzw. Ausgangsspannungslage auszulegen. Bei einer Verwendung eines Aufwärts-/Abwärtswandlers als Anpassstufe kann ein Gleichspannungszwischenkreis der Bordversorgungsstufe sowohl mit dem Gleichspannungswandler der Bordnetzversorgungsstufe als auch mit den Ausgangsanschlüssen des Batterieladegeräts verbunden werden.

Dies bietet einerseits den Vorteil, dass in dem Batterieladegerät auf einen separaten Tiefsetzsteller am Ausgang des Ladegeräts verzichtet werden kann. Andererseits kann das Batterieladegerät auf die Zwischenkreisspannung der Bordversorgungsstufe ausgelegt werden, die eine nahezu konstante Spannungslage aufweist und somit eine optimale Auslegung der spannungswandelnden Komponenten des Batterieladegeräts ermöglicht.

Weiterhin kann das Batterieladegerät in vorteilhafter Weise mit einer erhöhten Ausgangsleistung betrieben werden, da sowohl das Bordnetz über den Gleichspannungswandler der Bordnetzversorgungsstufe als auch ein Hochvoltnetz, wie beispielsweise eine Traktionsbatterie, über den Aufwärts-/Abwärtswandler gleichzeitig durch das Batterieladegerät mit Strom versorgt werden können. Dadurch teilt sich die durch das Batterieladegerät in den Gleichspannungszwischenkreis eingespeiste Leistung auf, so dass sowohl der Gleichspannungswandler als auch der Aufwärts-/Abwärtswandler nur auf jeweils einen Bruchteil der gesamten durch das Batterieladegerät bereitgestellten Leistung ausgelegt werden müssen.

Darüber hinaus verbessert sich der Wirkungsgrad der Bordnetzversorgungsstufe bei einem Laden eines Energiespeichers des Bordnetzes, da die Übertragungsleistung des Batterieladegeräts nicht über den Aufwärts-/Abwärtswandler geleitet werden muss, sondern direkt an das Bordnetz abgegeben werden kann.

Ein weiterer Vorteil besteht darin, dass ein nicht-potentialtrennendes Batterieladegerät bei entsprechender Leistungsauslegung nur noch aus einer Leistungskorrekturstufe bestehen kann, da der Aufwärts-/Abwärtswandler der Bordnetzversorgungsstufe als Tiefsetzsteller für das Batterieladegerät bereits in dem System vorhanden ist.

Vorteilhafterweise kann der Bordnetzgleichspannungswandler galvanisch entkoppelt sein. Besonders galvanisch entkoppelte Gleichspannungswandler sind in ihrer Leistungsauslegung durch die verwendeten Komponenten zur galvanischen Entkopplung limitiert. Daher bietet das System mit dem gemeinsam genutzten Aufwärts-/Abwärtswandler den Vorteil, sowohl eine Anpassstufe für den Bordnetzgleichspannungswandler als auch das Batterieladegerät bereitzustellen.

Erfindungsgemäß weist das Batterieladegerät eine Leistungsfaktorkorrekturstufe auf, welche dazu ausgelegt ist, eine Versorgungsspannung des Batterieladegeräts in eine Ladespannung zu wandeln und die Ladespannung an den Ausgangsanschlüssen bereitzustellen. Durch die Leistungsfaktorkorrekturstufe kann die Ladespannung in ihrer Spannungslage an die Zwischenkreisspannung angepasst werden.

Vorteilhafterweise kann das Batterieladegerät weiterhin ein Netzfilter aufweisen, welches mit der Leistungsfaktorkorrekturstufe verbunden ist, und welches dazu ausgelegt ist, die Versorgungsspannung, die an Eingangsanschlüssen des Netzfilters anlegbar ist, von Störsignalen zu filtern und der Leistungsfaktorkorrekturstufe als gefilterte Versorgungsspannung bereitzustellen. Besonders bei einem Versorgen des Bordnetzes mit Strom von einer Netzeinrichtung wie beispielsweise einer Ladestation für einen Energiespeicher des Bordnetzes kann dies vorteilhaft sein, um Störsignale der Netzeinrichtung effektiv zu unterdrücken.

Zusätzlich weist das Batterieladegerät erfindungsgemäß weiterhin einen galvanisch entkoppelten Gleichspannungswandler auf, welcher zwischen die Leistungsfaktorkorrekturstufe und die Ausgangsanschlüsse gekoppelt ist, und welcher dazu ausgelegt ist, die Spannungslage der Ladespannung zu wandeln. Durch die galvanische Entkopplung kann die elektromagnetische Verträglichkeit sowie die Sicherheit des Systems weiter verbessert werden.

In einer vorteilhaften Ausführungsform kann der Aufwärts-/Abwärtswandler dazu ausgelegt sein, die durch das Batterieladegerät bereitgestellte Ladespannung tiefzusetzen. Auf diese Weise kann das Batterieladegerät sowohl eine Traktionsbatterie als auch einen Energiespeicher des Bordnetzes gleichermaßen laden. Durch die Aufteilung der Ladeenergie kann die Gesamtleistung des Batterieladegeräts erhöht werden, ohne dass die Leistungsaufnahmefähigkeit des Aufwärts-/Abwärtswandler oder des Bordnetzgleichspannungswandlers erhöht werden muss.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
Fig. 1 eine schematische Darstellung eines Systems mit einem Batterieladegerät und einer Bordnetzversorgungsstufe gemäß einer Ausführungsform der vorliegenden Erfindung,
Fig. 2 eine schematische Darstellung eines Aufwärts-/Abwärtswandlers gemäß einer weiteren Ausführungsform der vorliegenden Erfindung,
Fig. 3 eine schematische Darstellung einer Leistungsfaktorkorrekturstufe gemäß einer weiteren Ausführungsform der vorliegenden Erfindung,
Fig. 4 eine schematische Darstellung eines Netzfilters gemäß einer weiteren Ausführungsform der vorliegenden Erfindung,
Fig. 5 eine schematische Darstellung eines Verfahrens zum Betreiben eines Systems mit einem Batterieladegerät und einer Bordnetzversorgungsstufe gemäß einer weiteren Ausführungsform der vorliegenden Erfindung, und
Fig. 6 eine schematische Darstellung eines elektrisch betriebenen Fahrzeugs mit einem System mit einem Batterieladegerät und einer Bordnetzversorgungsstufe gemäß einer weiteren Ausführungsform der vorliegenden Erfindung.

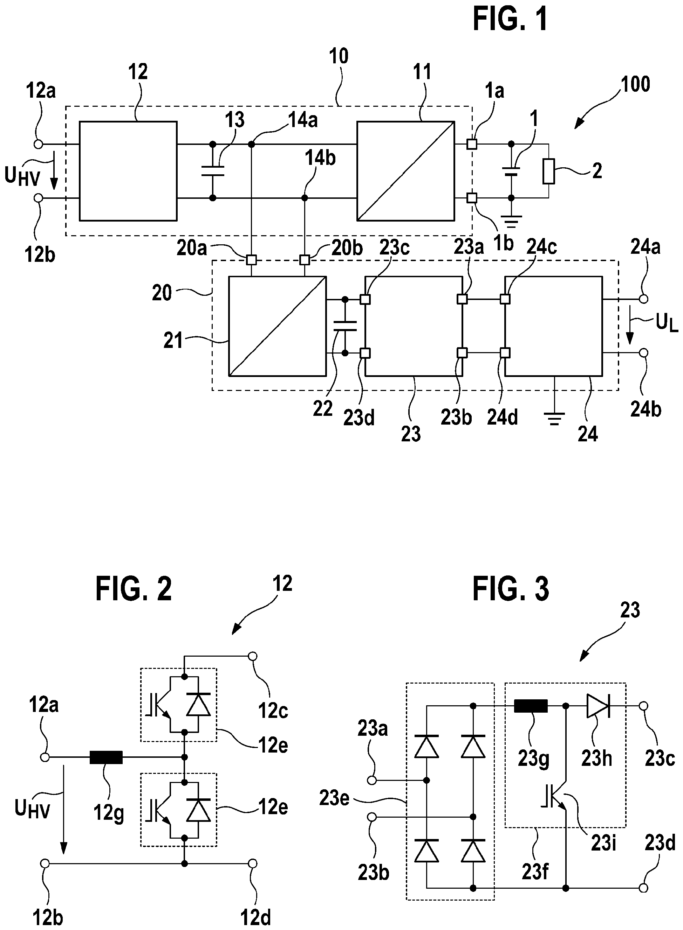

Fig. 1 zeigt eine schematische Darstellung eines Systems 100 mit einem Batterieladegerät 20 und einer Bordnetzversorgungsstufe 10, welche zum Beispiel das 12V-Bordnetz versorgen kann. Die Bordnetzversorgungsstufe 10 kann einen Bordnetzgleichspannungswandler 11, einen Gleichspannungszwischenkreis 13 und einen Aufwärts-/Abwärtswandler 12 aufweisen. An Eingangsanschlüssen 12a, 12b der Bordnetzversorgungsstufe 10 kann eine Eingangsspannung U_{HV}, beispielsweise eine Eingangsspannung aus einem Zwischenkreis eines Hochvoltnetzes, beispielsweise einer Traktionsbatterie eines elektrisch betriebenen Fahrzeugs wie einem Hybridfahrzeug oder einem Elektroauto, angelegt werden. Die Eingangsspannung U_{HV} kann beispielsweise zwischen 50 V und 500 V betragen und kann durch den Aufwärts-/Abwärtswandler 12 hochgesetzt werden. Dabei kann der Aufwärts-/Abwärtswandler 12 zur Sicherstellung einer ausreichenden Regelung die Eingangsspannung U_{HV} beispielsweise um mindestens 25 V hochsetzen.

Eine beispielhafte Ausgestaltung eines Aufwärts-/Abwärtswandlers 12 ist in der schematischen Darstellung in Fig. 2 gezeigt. Der Aufwärts-/Abwärtswandler 12 in Fig. 2 weist zwei Eingangsanschlüsse 12a und 12b auf, an welchen eine Eingangsspannung U_{HV} angelegt werden kann. Der Eingangsanschluss 12a ist über einer Speicherdrossel 12g mit einem Knoten zwischen zwei Parallelschaltungen 12e und 12f aus jeweils einem Schaltelement, beispielsweise einem Halbleiterschalter, wie einem MOSFET-Schalter, einem IGBT-Schalter oder einem BJT-Schalter, und einer Freilaufdiode verbunden. Durch das Schaltelement der Parallelschaltung 12f und die Freilaufdiode der Parallelschaltung 12e kann mithilfe der Speicherdrossel 12g eine Hochsetzfunktion des Aufwärts-/Abwärtswandlers 12 gewährleistet werden, so dass an den Ausgangsanschlüssen 12c und 12d des Aufwärts-/Abwärtswandlers 12 eine Ausgangsspannung anliegt, welche gegenüber der Eingangsspannung U_{HV} hochgesetzt ist.

Die hochgesetzte Eingangsspannung U_{HV} wird durch den Aufwärts-/Abwärtswandler 12 als Zwischenkreisspannung in den Gleichspannungszwischenkreis 13 der Bordnetzversorgungsstufe 10 eingespeist. Die Zwischenkreisspannung kann dabei gegenüber der aufgrund der variierenden Bedingungen schwankenden Eingangsspannung U_{HV} konstant bzw. nahezu konstant sein. Damit kann eine konstante Spannungslage als Eingangsspannung für den Gleichspannungswandler 11 gewährleistet werden, der dadurch in einem relativ kleinen Arbeitsbereich ausgelegt werden kann. Der Gleichspannungswandler 11 der Bordnetzversorgungsstufe 10 wandelt die Zwischenkreisspannung aus dem Gleichspannungszwischenkreis 13 in eine Bordnetzversorgungsspannung, das heißt, eine Gleichspannung für das Bordnetz, welche an Ausgangsanschlüssen 1a, 1b der Bordnetzversorgungsstufe 10 für das Bordnetz bereitgestellt werden können. Mit der Gleichspannung an den Ausgangsanschlüssen 1a, 1b kann beispielsweise ein Energiespeicher 1 des Bordnetzes oder eine elektrische Last 2 versorgt werden. Die Bordnetzversorgungsspannung kann dabei beispielsweise 12 V oder 14 V betragen.

Der Gleichspannungswandler 11 der Bordnetzversorgungsstufe 10 kann vorzugsweise ein galvanisch entkoppelter, das heißt, potentialtrennender Gleichspannungswandler 11 sein. Dies kann zur Gewährleistung der elektrischen Sicherheit gegenüber hohen Spannungen und der elektromagnetischen Verträglichkeit in dem sekundärseitig angeschlossenen Bordnetz beitragen. Insbesondere bei elektrisch betriebenen Fahrzeugen kann es aus Sicherheitsgründen vorgeschrieben sein, einen galvanisch entkoppelten Gleichspannungswandler 11 zu verwenden, so dass für Nutzer des Fahrzeugs, welche einen freien Zugriff auf das 12V-Bordnetz oder ein ähnliches Bordnetz mit einer ungefährlichen Betriebsspannung und insbesondere den Energiespeicher 1 des Bordnetzes haben, keine Gefährdung durch die hohen Spannungen aus dem Netz der Traktionsbatterie besteht.

Das Batterieladegerät 20 kann Ladeanschlüsse 24a, 24b aufweisen, an denen eine Versorgungsspannung U_{L} angelegt werden kann. Die Versorgungsspannung U_{L} kann beispielsweise durch eine Ladestation, einen Netzanschluss oder eine ähnliche Netzeinrichtung bereitgestellt werden. Dabei kann die Versorgungsspannung U_{L} eine Wechselspannung sein und beispielsweise eine Spannungslage von 100 V bis 260 V aufweisen.

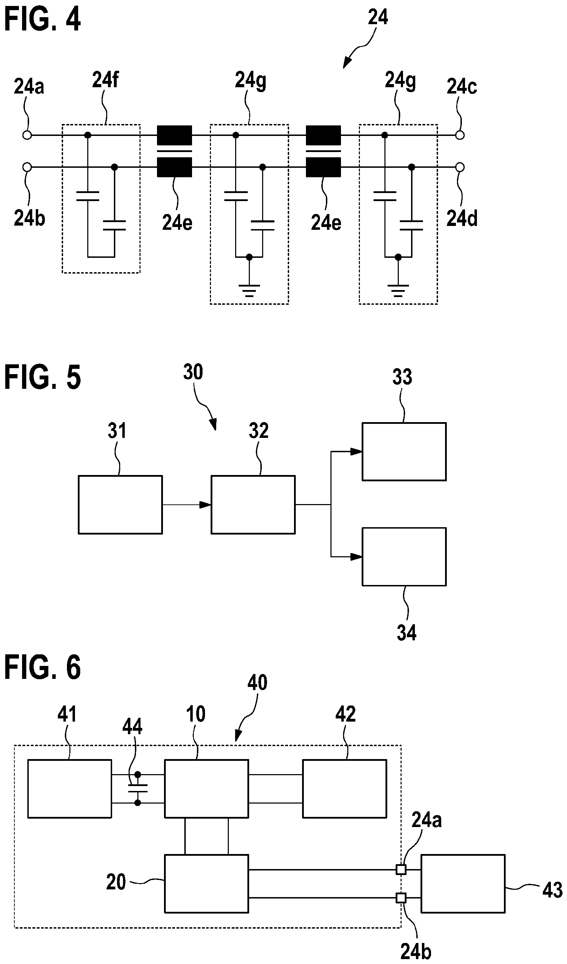

Die Ladeanschlüsse 24a, 24b können Eingangsanschlüsse eines Netzfilters 24 des Batterieladegeräts 20 sein. Eine beispielhafte Ausführungsform eines Netzfilters 24 ist in der schematischen Darstellung in Fig. 4 gezeigt. Das Netzfilter 24 der Fig. 4 kann dabei Drosseln 24e und Filterstufen 24f, 24g aufweisen. Die Drosseln 24e können dabei stromkompensierte Drosseln 24e aufweisen, welche beispielsweise dazu ausgelegt sein können, Gleichtaktstörsignale der Versorgungsspannung U_{L} an den Ladeanschlüssen 24a, 24b zu filtern. Die Filterstufen können dabei zwischen den Ladeanschlüssen 24a, 24b geschaltete Entstörkondensatoren aufweisen. Beispielhaft sind in Fig. 4 eine Filterstufe 24f, welche sogenannte X-Kondensatoren zur Unterdrückung von Gegentaktstörsignalen auf den Phasen- und Neutralleitern aufweist, und Filterstufen 24g gezeigt, welche sogenannte Y-Kondensatoren zur Unterdrückung von Gleichtaktstörsignalen zwischen Phasen-/Neutralleitern und dem Schutzleiter aufweist. An den Ausgangsanschlüssen 24c, 24d des Netzfilters 24 kann dabei eine gefilterte Versorgungsspannung U_{L} bereitgestellt werden. Die Anzahl und Auslegung der einzelnen Filterstufen 24f, 24g und Drosseln 24e kann dabei von der in Fig. 4 gezeigten Anzahl und Auslegung unterschiedlich sein, und an den jeweiligen Anwendungs-, Spannungs- und Leistungsbereich angepasst werden.

Die Ausgangsanschlüsse 24c, 24d des Netzfilters 24 können mit Eingangsanschlüssen 23a, 23b einer Leistungsfaktorkorrekturstufe 23 verbunden sein. Eine beispielhafte Ausgestaltungsmöglichkeit der Leistungsfaktorkorrekturstufe 23 ist in der schematischen Darstellung in Fig. 3 gezeigt. Die Leistungsfaktorkorrekturstufe 23 umfasst eine Gleichrichterstufe 23e, welche eine Vollbrückenschaltung von Dioden umfassen kann, sowie einen Hochsetzsteller 23f, welcher beispielsweise eine Speicherdrossel 23g, eine Freilaufdiode 23h sowie ein Schaltelement 23i, beispielsweise einen Halbleiterschalter wie einen MOSFET-Schalter, einen IGBT-Schalter oder einen BJT-Schalter, aufweisen kann. Die Leistungsfaktorkorrekturstufe 23 kann dabei beispielsweise zur Blindleistungskompensation der von einer Netzeinrichtung an das Batterieladegerät 20 abgegebenen Leistung verwendet werden. An den Ausgangsanschlüssen 23c, 23d der Leistungsfaktorkorrekturstufe 23 kann eine Ladespannung, insbesondere eine Gleichspannung, für einen ladegerätinternen Zwischenkreis 22 bereitgestellt werden.

Das Batterieladegerät 20 kann weiterhin einen Gleichspannungswandler 21, insbesondere einen galvanisch entkoppelten Gleichspannungswandler 21 aufweisen, welche die Ladespannung in dem Zwischenkreis 22 in der Spannungslage wandelt und an die Ausgangsanschlüsse 20a, 20b des Batterieladegeräts 20 abgeben kann.

Das Batterieladegerät 20 ist über die Ausgangsanschlüsse 20a, 20b mit Zwischenkreisknoten 14a, 14b der Bordnetzversorgungsstufe 10 verbunden. Auf diese Weise kann bei einem Laden des Energiespeichers 1 des Bordnetzes eine Ausgangsspannungslage des Batterieladegeräts 20 verwendet werden, die auf die Zwischenkreisspannung des Gleichspannungszwischenkreises 13 der Bordnetzversorgungsstufe 10 angepasst ist. Gleichzeitig kann der Aufwärts-/Abwärtswandler 12 der Bordnetzversorgungsstufe 10 als ausgangsseitiger bzw. sekundärseitiger Tiefsetzsteller des Batterieladegeräts 20 genutzt werden, wenn das Batterieladegerät 20 zum Laden einer Traktionsbatterie des Hochvoltnetzes verwendet wird.

Fig. 5 zeigt eine schematische Darstellung eines Verfahrens 30 zum Laden einer Traktionsbatterie und einer Bordnetzbatterie, insbesondere unter Einsatz des in Verbindung mit Fig. 1 bis 4 erläuterten Systems 100. In einem ersten Schritt 31 erfolgt ein Gleichrichten und Hochsetzen einer Versorgungsspannung U_{L} mit einem Batterieladegerät 20 in eine Zwischenkreisspannung. Dabei kann beispielsweise ein Batterieladegerät 20 wie in Fig. 1 gezeigt eingesetzt werden. Die Komponenten des Batterieladegeräts 20 können dabei auf die Spannungslage der Zwischenkreisspannung ausgelegt sein.

In einem zweiten Schritt 32 erfolgt ein Einspeisen der Zwischenkreisspannung in einen Zwischenkreis, insbesondere den Gleichspannungszwischenkreis 13 der Bordnetzversorgungsstufe 10. Dabei ist es vorteilhaft, wenn die Komponenten der Bordnetzversorgungsstufe 10, insbesondere der Aufwärts-/Abwärtswandler 12 der Bordnetzversorgungsstufe 10 auf eine Zwischenkreisspannung ausgelegt sind, welche der eingespeisten Zwischenkreisspannung des Batterieladegeräts 20 entspricht.

In einem dritten Schritt 33 und einem vierten Schritt 34 erfolgt in einem Lademodus gleichzeitig ein Wandeln der Zwischenkreisspannung aus dem Gleichspannungszwischenkreis 13 mit dem Gleichspannungswandler 11 in eine erste Versorgungsspannung zum Laden der Bordnetzbatterie 1 durch das Batterieladegerät 20, und ein Tiefsetzen der Zwischenkreisspannung aus dem Zwischenkreis 13 in eine zweite Versorgungsspannung mit dem Aufwärts-/Abwärtswandler 12 zum Laden einer Traktionsbatterie durch das Batterieladegerät 20. Der Aufwärts-/Abwärtswandler 12 wird dabei als sekundärseitiger Tiefsetzsteller für das Batterieladegerät 20 eingesetzt.

Dieses Vorgehen bietet den Vorteil, dass die Traktionsbatterie und die Bordnetzbatterie 1 gleichzeitig mit einer höheren Ladeleistung, beispielsweise 3,3 kW, aus dem Batterieladegerät 20 geladen werden können, da ein Teil der Leistung, beispielsweise bis zu 500 W, über den Gleichspannungswandler 11 in das Bordnetz fließt. Dabei ist die Spannungslage der Ausgangsspannung des Batterieladegeräts 20 bereits an die Zwischenkreisspannung des Gleichspannungszwischenkreises 13 der Bordnetzversorgungsstufe 10 angepasst, so dass kein Tiefsetzen zur Anpassung an den Gleichspannungswandler 11 mehr erfolgen muss.

Gleichzeitig wird der übrige Teil der Ladeleistung über den Aufwärts-/Abwärtswandler 12 als Tiefsetzsteller in das Hochvoltnetz zum Laden der Traktionsbatterie abgegeben. Da bereits ein Teil der Ladeleistung in das Bordnetz fließt, muss der Aufwärts-/Abwärtswandler 12 nicht für die volle Ladeleistung von beispielsweise 3,3 kW des Batterieladegeräts 20 ausgelegt werden, sondern kann auf eine niedrigere Leistung von beispielsweise 2,6 bis 3 kW ausgelegt werden.

In dem System 100 ist es prinzipiell auch möglich, den Gleichspannungswandler 11 zur Bordnetzversorgung in das Batterieladegerät 20 zu integrieren. In diesem Fall kann es vorgesehen sein, den Aufwärts-/Abwärtswandler 12 durch einen Aufwärts-/Abwärtswandler 12 des Batterieladegeräts 20 zu ersetzen.

Fig. 6 zeigt eine beispielhafte Ausführungsform für den Einsatz eines Systems 100 in einem elektrisch betriebenen Fahrzeug 40, beispielsweise einem Hybridfahrzeug oder einem Elektroauto. Das Fahrzeug 40 umfasst eine Traktionsbatterie 41, welche über einen Zwischenkreis 44 mit einer Bordnetzversorgungsstufe 10 verbunden ist. Die Bordnetzversorgungsstufe 10 ist dazu ausgelegt, eine Versorgungsspannung für ein Bordnetz 42 des Fahrzeugs 40 bereitzustellen, und kann dabei insbesondere der Bordnetzversorgungsstufe 10 in Fig. 1 entsprechen. Die Bordnetzversorgungsstufe 10 ist mit einem Batterieladegerät 20 gekoppelt, wie ebenfalls in Fig. 1 gezeigt. Das Batterieladegerät 20 kann beispielsweise ein in das Fahrzeug 40 integriertes Batterieladegerät 20 sein und über Ladeanschlüsse 24a, 24b mit einer Netzeinrichtung 43, beispielsweise einem öffentlichen Stromnetz, einer Ladestation oder einer ähnlichen Einrichtung verbunden werden. Es kann alternativ ebenso möglich sein, das Batterieladegerät 20 als externes Gerät an das Fahrzeug 40 anzuschließen. In diesem Fall kann die Bordnetzversorgungsstufe 10 über Anschlüsse verfügen, über welche das externe Batterieladegerät 20 mit den Zwischenkreisknoten 14a, 14b der Bordnetzversorgungsstufe 10 verbunden werden kann.

Die Traktionsbatterie 41 ist dabei dazu ausgelegt, eine Eingangsspannung in die Bordnetzversorgungsstufe 10 einzuspeisen, welche eine Versorgungsspannung, insbesondere eine Gleichspannung für das Bordnetz 43 mit einer Bordnetzbatterie 1 bereitstellt. Über die Ladeanschlüsse 24a, 24b, welche mit dem Batterieladegerät 20 verbunden sind, kann eine Versorgungsspannung zum Laden der Bordnetzbatterie 1 und der Traktionsbatterie 41 angeschlossen werden.

## Patentansprüche

1. System (100), mit:
einem Batterieladegerät (20) mit Ausgangsanschlüssen (20a, 20b); und einer Bordnetzversorgungsstufe (10), welche aufweist:
einen Aufwärts-/Abwärtswandler (12), welcher dazu ausgelegt ist, eine Eingangsspannung (U_{HV}) der Bordnetzversorgungsstufe (10) in eine Zwischenkreisspannung hochzusetzen,
einen Gleichspannungszwischenkreis (13), welcher mit dem Aufwärts-/Abwärtswandler (12) an Zwischenkreisknoten (14a, 14b) gekoppelt ist, und
einen Bordnetzgleichspannungswandler (11), welcher mit dem Gleichspannungszwischenkreis (13) an den Zwischenkreisknoten (14a, 14b) gekoppelt ist, und welcher dazu ausgelegt ist, die Zwischenkreisspannung in eine Gleichspannung für ein Bordnetz zu wandeln,
wobei die Ausgangsanschlüsse (20a, 20b) des Batterieladegeräts (20) über die Zwischenkreisknoten (14a, 14b) mit dem Gleichspannungszwischenkreis (13) gekoppelt sind,
**dadurch gekennzeichnet, dass** das Batterieladegerät (20) weiterhin aufweist:
eine Leistungsfaktorkorrekturstufe (23), welche dazu ausgelegt ist, eine Versorgungsspannung (U_{L}) des Batterieladegeräts (20) in eine Ladespannung zu wandeln und die Ladespannung an den Ausgangsanschlüssen (20a, 20b) bereitzustellen, und
einen galvanisch entkoppelten Gleichspannungswandler (21), welcher zwischen die Leistungsfaktorkorrekturstufe (23) und die Ausgangsanschlüsse (20a, 20b) gekoppelt ist, und welcher dazu ausgelegt ist, die Spannungslage der Ladespannung zu wandeln, wobei die Leistungsfaktorkorrekturstufe (23) dazu ausgelegt ist, eine von einer Netzeinrichtung an das Batterieladegerät (20) abgegebene Blindleistung zu kompensieren.

2. System (100) nach Anspruch 1, wobei der Bordnetzgleichspannungswandler (11) galvanisch entkoppelt ist.

3. System (100) nach einem der Ansprüche 1 und 2, wobei das Batterieladegerät (20) weiterhin aufweist:
ein Netzfilter (24), welches mit der Leistungsfaktorkorrekturstufe (23) verbunden ist, und welches dazu ausgelegt ist, die Versorgungsspannung (U_{L}), die an Eingangsanschlüssen (24a, 24b) des Netzfilters (24) anlegbar ist, von Störsignalen zu filtern und der Leistungsfaktorkorrekturstufe (23) als gefilterte Versorgungsspannung bereitzustellen.

4. System (100) nach einem der Ansprüche 1 bis 3, wobei der Aufwärts-/Abwärtswandler (12) dazu ausgelegt ist, die durch das Batterieladegerät (20) bereitgestellte Ladespannung tiefzusetzen.

5. Elektrisch betriebenes Fahrzeug oder Plug-In-Hybridfahrzeug (40), mit:
einem System (100) nach einem der Ansprüche 1 bis 4;
einer Traktionsbatterie (41), welche dazu ausgelegt ist, eine Eingangsspannung (U_{HV}) in die Bordnetzversorgungsstufe (10) des Systems (100) einzuspeisen;
einem Bordnetz (43) mit einer Bordnetzbatterie (1), welches dazu ausgelegt ist, die Gleichspannung der Bordnetzversorgungsstufe (10) des Systems (100) zu empfangen; und
Ladeanschlüssen (24a, 24b), welche mit dem Batterieladegerät (20) verbunden sind, und welche dazu ausgelegt sind, mit einer Versorgungsspannung (U_{L}) zum Laden der Bordnetzbatterie (1) und der Traktionsbatterie (41) beaufschlagt zu werden.

## Claims

1. System (100), having
a battery charging device (20) with output connections (20a, 20b); and
an onboard electrical power supply stage (10), which has:
a step-up/step-down converter (12), which is designed to step up an input voltage (U_{HV}) of the onboard electrical power supply stage (10) into an intermediate circuit voltage,
a DC voltage intermediate circuit (13), which is coupled to the step-up/step-down converter (12) at intermediate circuit nodes (14a, 14b), and
an onboard electrical power supply DC voltage converter (11), which is coupled to the DC voltage intermediate circuit (13) at the intermediate circuit nodes (14a, 14b) and which is designed to convert the intermediate circuit voltage into a DC voltage for an onboard electrical power supply,
wherein the output connections (20a, 20b) of **characterized in that** the battery charging device (20) are coupled to the DC voltage intermediate circuit (13) via the intermediate circuit nodes (14a, 14b), the battery charging device (20) also has:
a power factor correction stage (23), which is designed to convert a supply voltage (U_{L}) of the battery charging device (20) into a charging voltage and to supply the charging voltage to the output connections (20a, 20b), and
a galvanically decoupled DC voltage converter (21),
which is coupled between the power factor correction stage (23) and the output connections (20a, 20b) and
which is designed to convert the voltage level of the charging voltage,
wherein the power factor correction stage (23) is designed to compensate for a reactive power output by an electrical power supply apparatus to the battery charging device (20).

2. System (100) according to Claim 1, wherein the onboard electrical power supply DC voltage converter (11) is galvanically decoupled.

3. System (100) according to either of Claims 1 and 2, wherein the battery charging device (20) also has:
a line filter (24), which is connected to the power factor correction stage (23) and which is designed to filter interference signals from the supply voltage (U_{L}), which can be applied to input connections (24a, 24b) of the line filter (24), and to supply said supply voltage to the power factor correction stage (23) as filtered supply voltage.

4. System (100) according to one of Claims 1 to 3, wherein the step-up/step-down converter (12) is designed to step down the charging voltage supplied by the battery charging device (20).

5. Electrically operated vehicle or plug-in hybrid vehicle (40), having
a system (100) according to one of Claims 1 to 4;
a traction battery (41), which is designed to feed an input voltage (U_{HV}) into the onboard electrical power supply stage (10) of the system (100);
an onboard electrical power supply (43) having an onboard electrical power supply battery (1), which onboard electrical power supply is designed to receive the DC voltage of the onboard electrical power supply stage (10) of the system (100); and
charging connections (24a, 24b), which are connected to the battery charging device (20) and which are designed to have applied thereto a supply voltage (U_{L}) for charging the onboard electrical power supply battery (1) and the traction battery (41).

## Revendications

1. Système (100), comprenant :
un chargeur de batterie (20) muni de bornes de sortie (20a, 20b) ; et
un étage d'alimentation de réseau de bord (10) qui comporte :
un convertisseur élévateur/abaisseur (12) conçu pour élever une tension d'entrée (U_{HV}) de l'étage d'alimentation de réseau de bord (10) en une tension de circuit intermédiaire,
un circuit intermédiaire à tension continue (13) qui est couplé au convertisseur élévateur/abaisseur (12) au niveau de noeuds de circuit intermédiaire (14a, 14b), et
un convertisseur de tension continue de réseau de bord (11) qui est couplé au circuit intermédiaire à tension continue (13) au niveau de noeuds de circuit intermédiaire (14a, 14b) et qui est conçu pour convertir la tension de circuit intermédiaire en tension continue destinée à un réseau de bord,
les bornes de sortie (20a, 20b) du chargeur de batterie (20) étant couplées au circuit intermédiaire à tension continue (13) par le biais des noeuds de circuit intermédiaire (14a, 14b),
**caractérisé en ce que** le chargeur de batterie (20) comporte en outre :
un étage de correction de facteur de puissance (23) qui est conçu pour convertir une tension d'alimentation (U_{L}) du chargeur de batterie (20) en une tension de charge et pour produire la tension de charge aux bornes de sortie (20a, 20b), et
un convertisseur de tension continue (21), découplé galvaniquement, qui est couplé entre l'étage de correction de facteur de puissance (23) et les bornes de sortie (20a, 20b) et qui est conçu pour convertir le niveau de tension de la tension de charge,
l'étage de correction de facteur de puissance (23) étant conçu pour compenser une puissance réactive délivrée par un dispositif de réseau au chargeur de batterie (20).

2. Système (100) selon la revendication 1, dans lequel le convertisseur de tension continue de réseau de bord (11) est découplé galvaniquement.

3. Système (100) selon l'une des revendications 1 et 2, dans lequel le chargeur de batterie (20) comporte en outre :
un filtre de réseau (24) qui est relié à l'étage de correction de facteur de puissance (23) et qui est conçu pour filtrer la tension d'alimentation (U_{L}), qui peut être appliquée aux bornes d'entrée (24a, 24b) du filtre de réseau (24), de signaux d'interférence et l'amener à l'étage de correction de facteur de puissance (23) sous la forme d'une tension d'alimentation filtrée.

4. Système (100) selon l'une des revendications 1 à 3, dans lequel le convertisseur élévateur/abaisseur (12) est conçu pour abaisser la tension de charge produite par le chargeur de batterie (20).

5. Véhicule électrique ou véhicule hybride rechargeable (40), comprenant :
un système (100) selon l'une des revendications 1 à 4 ;
une batterie de traction (41) qui est conçue pour fournir une tension d'entrée (U_{HV}) à l'étage d'alimentation de réseau de bord (10) du système (100) ;
un réseau de bord (43) comportant une batterie (1), qui est conçue pour recevoir la tension continue de l'étage d'alimentation de réseau de bord (10) du système (100) ; et
des bornes de charge (24a, 24b) qui sont reliées au chargeur de batterie (20) et qui sont conçues pour être soumises à une tension d'alimentation (U_{L}) pour charger la batterie de réseau de bord (1) et la batterie de traction (41).
